# EUROPÄISCHE PATENTANMELDUNG

(11) **EP 4 717 532 A1**
(43) Veröffentlichungstag der Anmeldung: **01.04.2026**
(21) Anmeldenummer: 24202582.3
(22) Anmeldetag: 25.09.2024
(51) Int. Cl.: B60T 1/06, F16D 65/12, F16D 65/78, F16D 65/853

(54) **SCHMIERVORRICHTUNG**

(71) Anmelder: Deere & Company, Moline, IL 61265 (US)
(72) Erfinder: Steiner, Tobias, 68163 Mannheim (DE); Tambe, Shaligram, 68163 Mannheim (DE)
(74) Vertreter: Dehnhardt, Florian Christopher

(57) **Zusammenfassung**

Die Erfindung betrifft eine Schmiervorrichtung (16), insbesondere zur Schmierung einer Bremsscheibe (18) einer ölgekühlten Fahrzeugbremse (14), mit einem von einer zentralen Antriebswelle (26) durchdrungenen Verteilergehäuse (40), wobei die zentrale Antriebswelle (26) von dem Verteilergehäuse (40) derart radial umgeben ist, dass ein Ringspalt (46) zur Zufuhr von Schmierstoff (48) gebildet ist, wobei an einem dem Ringspalt (46) abgewandten axialen Ende (52) des Verteilergehäuses (40) radiale Ausleger (54) ausgebildet sind, die jeweils in einen an einem Auslegerende (56) vorgesehenen Verteilerstutzen (58) münden, wobei ein Schmierstoffkanal (60) vom Ringspalt (46) zum Verteilerstutzen (58) verläuft, wobei ferner ein Deckel (64) vorhanden ist, der den Verteilerstutzen (58) abdeckt, um mit einer von dem Verteilerstutzen (58) umgebenen Ausnehmung eine Schmierstoffkammer (66) zu bilden, wobei der Deckel (64) Schmierstofföffnungen (68) derart aufweist, dass Schmierstoff (48) aus der Schmierstoffkammer (66) in Richtung eines zur Montage einer Bremsscheibe (18) vorgesehenen Befestigungsbereichs (70) austreten kann.

## Beschreibung

Die Erfindung betrifft eine Schmiervorrichtung, insbesondere zur Schmierung einer Bremsscheibe einer ölgekühlten Fahrzeugbremse.

Die Verwendung ölgekühlter Fahrzeugbremsen stellt bei landwirtschaftlichen Traktoren zur Vermeidung wärmebedingter Bremskraftverluste eine gängige Maßnahme dar. Hierbei ist eine gleichmäßige Beaufschlagung bzw. Umspülung einer von der Fahrzeugbremse umfassten Bremsscheibe mit Öl im Sinne einer verlässlichen Wärmeabfuhr von besonderer Bedeutung.

Angesichts dessen ist es Aufgabe der vorliegenden Erfindung, eine hinsichtlich ihrer Leistungsfähigkeit optimierte Schmiervorrichtung der eingangs genannten Art anzugeben.

Diese Aufgabe wird durch eine Schmiervorrichtung mit den Merkmalen des Patentanspruchs 1 gelöst.

Die erfindungsgemäße Schmiervorrichtung weist ein von einer zentralen Antriebswelle durchdrungenes Verteilergehäuse auf, wobei die zentrale Antriebswelle von dem Verteilergehäuse derart radial umgeben ist, dass ein Ringspalt zur Zufuhr von Schmierstoff gebildet ist, wobei an einem dem Ringspalt abgewandten axialen Ende des Verteilergehäuses radiale Ausleger ausgebildet sind, die jeweils in einen an einem Auslegerende vorgesehenen Verteilerstutzen münden, wobei ein Schmierstoffkanal vom Ringspalt zum Verteilerstutzen verläuft, wobei ferner ein Deckel vorhanden ist, der den Verteilerstutzen abdeckt, um mit einer von dem Verteilerstutzen umgebenen Ausnehmung eine Schmierstoffkammer zu bilden, wobei der Deckel Schmierstofföffnungen derart aufweist, dass Schmierstoff aus der Schmierstoffkammer in Richtung eines zur Montage einer Bremsscheibe vorgesehenen Befestigungsbereichs austreten kann. Die so gebildete Schmiervorrichtung ermöglicht eine besonders gleichmäßige Beaufschlagung einer damit ausgestatteten Bremsscheibe mit Schmierstoff, sodass sich bei unveränderter Baugröße eine verbesserte Wärmeableitung und damit entsprechend höhere Bremsleistungen der Fahrzeugbremse erzielen lassen. Bei dem Schmierstoff handelt es sich typischerweise um herkömmliches (Hydraulik-) Öl.

Die Schmiervorrichtung ist insbesondere Bestandteil einer Fahrzeugbremse eines landwirtschaftlichen Traktors und dort jeweils in einen rechten bzw. linken Achstrichter eines Hinterachsdifferentials integriert. Die über eine Verzahnung mit der Bremsscheibe drehverbundene zentrale Antriebswelle steht hierbei mit einem Sonnenrad eines Planetengetriebes einer Endantriebeinheit zur Drehmomentübersetzung in Verbindung. An der Endantriebeinheit tritt eine Hinterachse mit einem daran angebrachten Hinterrad aus.

Bevorzugte Weiterbildungen der erfindungsgemäßen Schmiervorrichtung gehen aus den Unteransprüchen hervor.

Um eine gleichmäßige Benetzung einer an dem Verteilergehäuse angebrachten Bremsscheibe mit Schmierstoff zu gewährleisten, sind mindestens drei in Bezug auf einen Umfang des Verteilergehäuses äquidistant zueinander angeordnete radiale Ausleger vorhanden.

Bevorzugt verläuft der Schmierstoffkanal in einem Winkel von höchstens 45 Grad, vorzugsweise zwischen 15 und 45 Grad, in Bezug auf eine mit der zentralen Antriebswelle zusammenfallende Drehachse, wobei das Verteilergehäuse in axialer Richtung umso flacher baut, je größer der Winkel ist. Der radiale Ausleger, der zugehörige Schmierstoffkanal wie auch ein insofern angrenzender Abschnitt am Verteilergehäuse bilden hierbei eine dreieckförmige Radialstruktur aus.

Bei dem Verteilergehäuse handelt es sich in der Regel um ein im Spritzgussverfahren hergestelltes Kunststoffbauteil. Dessen Robustheit lässt sich erhöhen, wenn eine durchgehende Verstärkungsplatte den radialen Ausleger, den Schmierstoffkanal sowie den insofern angrenzenden Abschnitt am Verteilergehäuse miteinander stabilisierend verbindet, mithin die durch diese ausgebildete dreieckförmige Radialstruktur vollständig geschlossen ist.

Des Weiteren kann vorgesehen sein, dass entlang einer zylindrischen Wandung des Verteilerstutzens weitere Schmierstofföffnungen ausgebildet sind, aus denen ebenfalls Schmierstoff in Richtung des Befestigungsbereichs austreten kann, sodass eine beidseitige Benetzung einer Bremsscheibe mit Schmierstoff möglich ist.

Die Schmierstofföffnungen sind insbesondere umfangsmäßig am Deckel und/oder Verteilerstutzen in Gestalt einer Düsenreihe nebeneinander angeordnet, sodass ein fächerförmiger Schmierstoffaustritt in Richtung des Oberflächenverlaufs Bremsscheibe bewirkt wird. Dies führt zu einer flächigen und damit besonders gleichmäßigen Beaufschlagung der Bremsscheibe mit Schmierstoff.

Um eine unkomplizierte Anbringung des Deckels und damit der Bremsscheibe am Verteilerstutzen zu ermöglichen, kann vorgesehen sein, dass der Deckel einen im Bereich eines Befestigungsflanschs umlaufenden Vorsprung insbesondere in Gestalt einer Rastnase aufweist, der in montiertem Zustand in eine am Verteilerstutzen vorgesehene Ausnehmung bzw. umfangsmäßig ausgebildete Nut zur Herstellung einer flüssigkeitsdichten Rastverbindung eingreift. Alternativ kann anstelle des umlaufenden Vorsprungs auch ein Gewinde zur flüssigkeitsdichten Verschraubung des Deckels mit einem komplementären Gewinde am Verteilerstutzen vorhanden sein.

Der zur Montage der Bremsscheibe vorgesehene Befestigungsbereich kann am Verteilerstutzen eine Anlagefläche zur formschlüssigen Aufnahme einer von einer Bremsscheibe umfassten Montageöffnung aufweisen, wobei der Deckel in angebrachtem Zustand derart gegen die Bremsscheibe gepresst wird, dass eine vibrationssichere Klemmverbindung gegenüber der Anlagefläche hergestellt ist.

Die erfindungsgemäße Schmiervorrichtung wird im Folgenden anhand der beigefügten Zeichnungen näher erläutert. Dabei sind übereinstimmende bzw. hinsichtlich ihrer Funktion vergleichbare Komponenten mit denselben Bezugszeichen gekennzeichnet. Es zeigen:
- Fig. 1: eine Teilansicht eines Hinterachsdifferentials eines landwirtschaftlichen Traktors im Schnitt, ausgestattet mit einer ölgekühlten Fahrzeugbremse, die eine erfindungsgemäße Schmiervorrichtung zur Schmierung einer von der ölgekühlten Fahrzeugbremse umfassten Bremsscheibe aufweist,
- Fig. 2: eine vergrößerte Teilansicht der mit der erfindungsgemäßen Schmiervorrichtung ausgestatteten ölgekühlten Fahrzeugbremse gemäß Fig. 1,
- Fig. 3: eine erste perspektivische Einzelansicht der erfindungsgemäßen Schmiervorrichtung gemäß Fig. 1, und

- Fig. 4: eine zweite perspektivische Einzelansicht der erfindungsgemäßen Schmiervorrichtung gemäß Fig. 1.

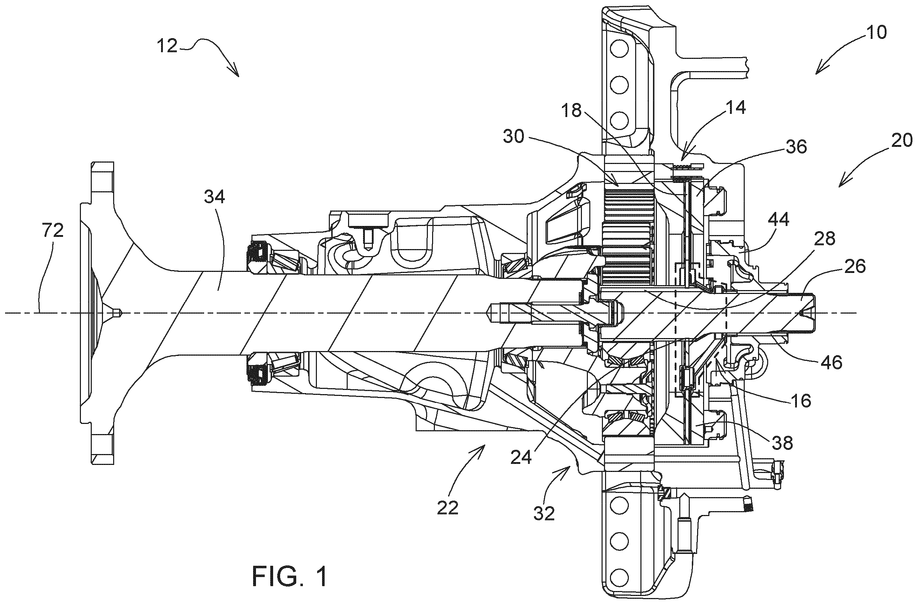

Fig. 1 zeigt eine Teilansicht eines Hinterachsdifferentials 10 eines (nicht explizit wiedergegebenen) landwirtschaftlichen Traktors 12 im Schnitt, ausgestattet mit einer ölgekühlten Fahrzeugbremse 14, die eine Schmiervorrichtung 16 zur Schmierung einer von der ölgekühlten Fahrzeugbremse 14 umfassten Bremsscheibe 18 aufweist.

Genauer gesagt ist die Schmiervorrichtung 16 jeweils in einen rechten bzw. linken Achstrichter 20, 22 eines Hinterachsdifferentials 10 integriert. Aus Gründen der Übersichtlichkeit ist lediglich der linke Achstrichter 22 vollständig dargestellt, der rechte Achstrichter 20 weist einen dazu symmetrischen Aufbau auf. Wie zu erkennen ist, steht eine über eine Verzahnung 24 mit der Bremsscheibe 18 drehverbundene zentrale Antriebswelle 26 mit einem Sonnenrad 28 eines Planetengetriebes 30 einer Endantriebeinheit 32 zur Drehmomentübersetzung in Verbindung. An der Endantriebeinheit 32 tritt eine Hinterachse 34 mit einem daran angebrachten Hinterrad (nicht gezeigt) aus. Zur Verzögerung einer an der zentralen Antriebswelle 26 auftretenden Drehung lassen sich erste und zweite hydraulisch betätigbare Bremsbacken 36, 38 mit der Bremsscheibe 18 in Eingriff bringen.

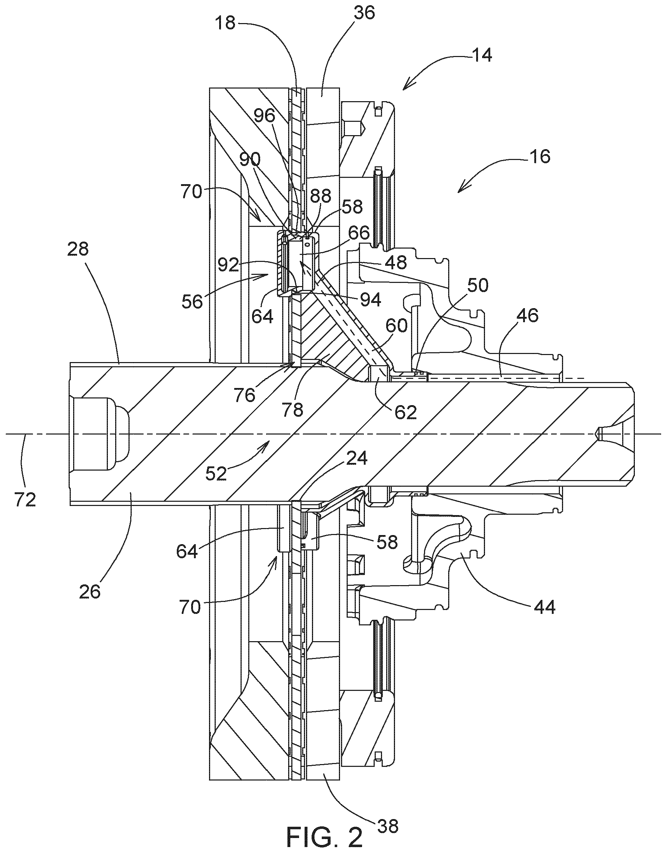

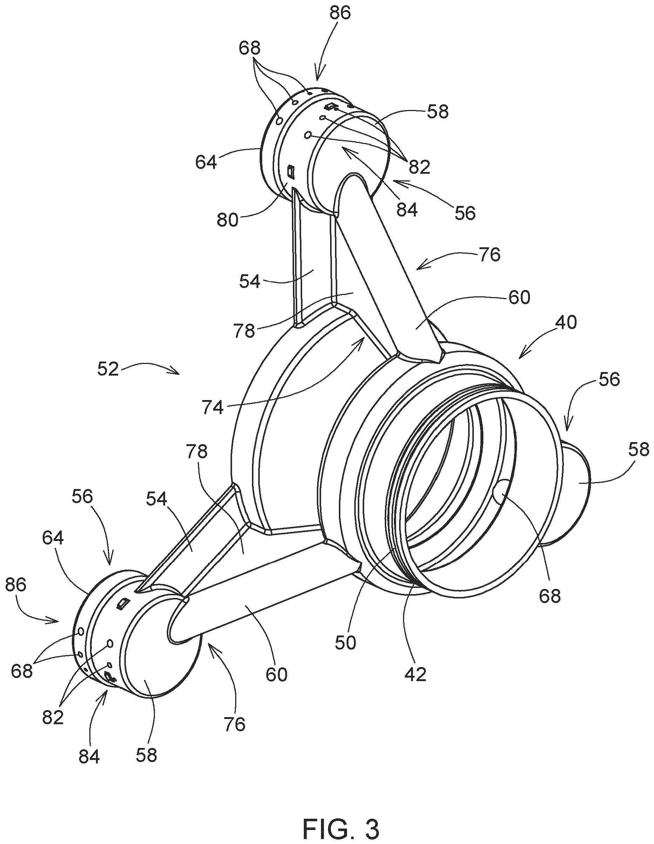

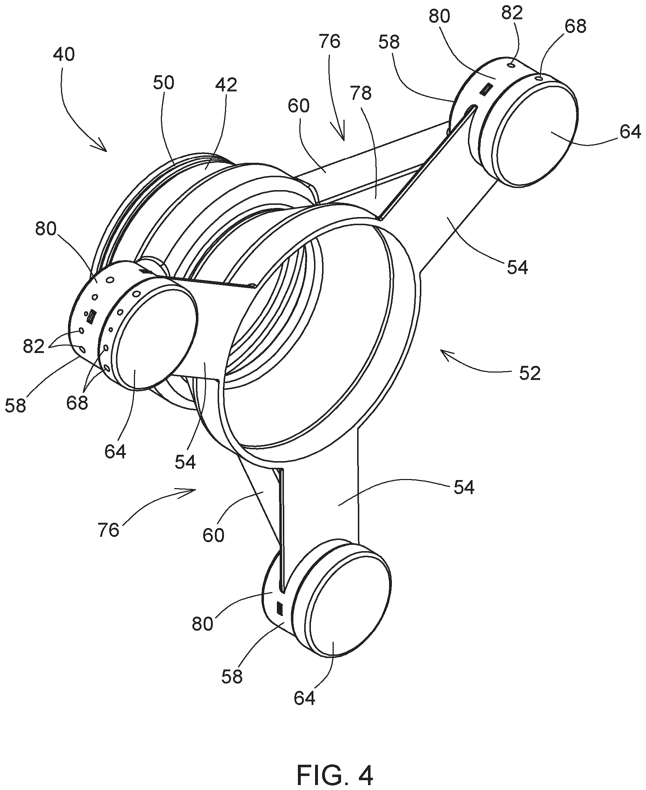

In Fig. 2 ist eine vergrößerte Teilansicht der mit der Schmiervorrichtung 16 ausgestatteten ölgekühlten Fahrzeugbremse 14 gemäß Fig. 1 wiedergegeben. Demgemäß weist die Schmiervorrichtung 16 ein von der zentralen Antriebswelle 26 durchdrungenes Verteilergehäuse 40 auf. Das Verteilergehäuse 40 umgibt die zentrale Antriebswelle 26 mit einem zylindrischen Basisgehäuse 42 derart radial, dass ein entlang einer mitdrehenden Pinole 44 verlängerter Ringspalt 46 zur Zufuhr von Schmierstoff 48 gebildet ist. Pinole 44 und zylindrisches Basisgehäuse 42 sind hierbei mittels eines Elastomerrings 50 gegeneinander abgedichtet. An einem dem Ringspalt 46 abgewandten axialen Ende 52 des Verteilergehäuses 40 sind radiale Ausleger 54 ausgebildet (siehe Fig. 3 und 4), die jeweils in einen an einem Auslegerende 56 vorgesehenen Verteilerstutzen 58 münden, wobei ein Schmierstoffkanal 60 jeweils vom Ringspalt 46 zu einem der Verteilerstutzen 58 verläuft. Wie in der Einzelansicht der Schmiervorrichtung 16 gemäß Fig. 3 zu sehen ist, mündet in den Ringspalt 46 eine auf einer Innenseite des zylindrischen Basisgehäuses 42 vorgesehene Eintrittsöffnung 62 des angrenzenden Schmierstoffkanals 60.

Des Weiteren ist ein Deckel 64 vorhanden, der den Verteilerstutzen 58 abdeckt, um mit einer von dem Verteilerstutzen 58 umgebenen Ausnehmung eine Schmierstoffkammer 66 zu bilden. Der Deckel 64 weist Schmierstofföffnungen 68 derart auf, dass der Schmierstoff 48 aus der Schmierstoffkammer 66 in Richtung eines zur Montage der Bremsscheibe 18 vorgesehenen Befestigungsbereichs 70 austreten kann.

Die so gebildete Schmiervorrichtung 16 ermöglicht eine besonders gleichmäßige Beaufschlagung der Bremsscheibe 18 mit Schmierstoff 48. Bei dem Schmierstoff 48 handelt es sich um herkömmliches (Hydraulik-) Öl. Dieses wird vom Hinterachsdifferential 10 kommend unter dem Einfluss eines fahrzeugseitigen Systemdrucks entlang der zentralen Antriebswelle 26 in den Ringspalt 46 gepresst.

Um eine gleichmäßige Benetzung einer an dem Verteilergehäuse 40 angebrachten Bremsscheibe 18 mit Schmierstoff 48 zu gewährleisten, sind beispielsgemäß drei in Bezug auf einen Umfang des Verteilergehäuses 40 äquidistant zueinander angeordnete radiale Ausleger 54 vorhanden. Jeder der Schmierstoffkanäle 60 verläuft jeweils in einem Winkel von in etwa 45 Grad in Bezug auf eine mit der zentralen Antriebswelle 26 zusammenfallende Drehachse 72, wobei das Verteilergehäuse 40 in axialer Richtung umso flacher baut, je größer der Winkel ist. Der radiale Ausleger 54, der zugehörige Schmierstoffkanal 60 wie auch ein insofern angrenzender Abschnitt 74 am Verteilergehäuse 40 bilden hierbei eine dreieckförmige Radialstruktur 76 aus.

Bei dem Verteilergehäuse 40 handelt es sich um ein im Spritzgussverfahren hergestelltes Kunststoffbauteil. Eine durchgehende Verstärkungsplatte 78 verbindet den radialen Ausleger 54, den Schmierstoffkanal 60 sowie den angrenzenden Abschnitt 74 am Verteilergehäuse 40 stabilisierend miteinander, sodass die dreieckförmige Radialstruktur 76 vollständig geschlossen ist (siehe hierzu die beiden perspektiven Einzelansichten der Schmiervorrichtung 16 in Fig. 3 und 4).

Des Weiteren ist vorgesehen, dass entlang einer zylindrischen Wandung 80 des Verteilerstutzens 58 weitere Schmierstofföffnungen 82 ausgebildet sind, aus denen ebenfalls Schmierstoff 48 in Richtung des Befestigungsbereichs 70 austreten kann, sodass eine beidseitige Benetzung der Bremsscheibe 18 mit Schmierstoff 48 erfolgt.

Die Schmierstofföffnungen 68, 82 sind umfangsmäßig am Deckel 64 und/oder Verteilerstutzen 58 in Gestalt einer jeweiligen Düsenreihe 84, 86 nebeneinander angeordnet. Hierdurch wird ein fächerförmiger Schmierstoffaustritt in Richtung des Oberflächenverlaufs der Bremsscheibe 18 bewirkt. Dies führt zu einer flächigen und damit besonders gleichmäßigen Beaufschlagung der Bremsscheibe 18 mit Schmierstoff 48.

Wie in Fig. 2 zu erkennen ist, weist der Deckel 64 einen im Bereich eines Befestigungsflanschs 88 umlaufenden Vorsprung 90 in Gestalt einer Rastnase auf, der in montiertem Zustand in eine am Verteilerstutzen 58 vorgesehene Ausnehmung 92 in Gestalt einer umfangsmäßig ausgebildeten Nut zur Herstellung einer flüssigkeitsdichten Rastverbindung eingreift. Alternativ kann anstelle des umlaufenden Vorsprungs 90 auch ein Gewinde zur flüssigkeitsdichten Verschraubung des Deckels 64 mit einem komplementären Gewinde am Verteilerstutzen 58 vorhanden sein.

Hierbei weist der zur Montage der Bremsscheibe 18 vorgesehene Befestigungsbereich 70 am Verteilerstutzen 58 eine Anlagefläche 94 zur formschlüssigen Aufnahme einer von der Bremsscheibe 18 umfassten Montageöffnung 96 auf, wobei der Deckel 64 in angebrachtem Zustand derart gegen die Bremsscheibe 18 gepresst wird, dass eine vibrationssichere Klemmverbindung gegenüber der Anlagefläche 94 hergestellt ist.

Die in den Fig. 1 bis 4 gezeigte Schmiervorrichtung 16 stellt lediglich ein repräsentatives Ausführungsbeispiel dar und kann ebenso gut einen den jeweiligen Erfordernissen angepassten bzw. insoweit abweichenden Aufbau aufweisen.

## Patentansprüche

1. Schmiervorrichtung, insbesondere zur Schmierung einer Bremsscheibe einer ölgekühlten Fahrzeugbremse, aufweisend ein von einer zentralen Antriebswelle (26) durchdrungenes Verteilergehäuse (40), wobei die zentrale Antriebswelle (26) von dem Verteilergehäuse (40) derart radial umgeben ist, dass ein Ringspalt (46) zur Zufuhr von Schmierstoff (48) gebildet ist, wobei an einem dem Ringspalt (46) abgewandten axialen Ende (52) des Verteilergehäuses (40) radiale Ausleger (54) ausgebildet sind, die jeweils in einen an einem Auslegerende (56) vorgesehenen Verteilerstutzen (58) münden, wobei ein Schmierstoffkanal (60) vom Ringspalt (46) zum Verteilerstutzen (58) verläuft, wobei ferner ein Deckel (64) vorhanden ist, der den Verteilerstutzen (58) abdeckt, um mit einer von dem Verteilerstutzen (58) umgebenen Ausnehmung eine Schmierstoffkammer (66) zu bilden, wobei der Deckel (64) Schmierstofföffnungen (68) derart aufweist, dass Schmierstoff (48) aus der Schmierstoffkammer (66) in Richtung eines zur Montage einer Bremsscheibe (18) vorgesehenen Befestigungsbereichs (70) austreten kann.

2. Schmiervorrichtung nach Anspruch 1, **dadurch gekennzeichnet, dass** mindestens drei in Bezug auf einen Umfang des Verteilergehäuses (40) äquidistant zueinander angeordnete radiale Ausleger (54) vorhanden sind.

3. Schmiervorrichtung nach Anspruch 1 oder 2, **dadurch gekennzeichnet, dass** der Schmierstoffkanal (60) in einem Winkel von höchstens 45 Grad, vorzugsweise zwischen 15 und 45 Grad, in Bezug auf eine mit der zentralen Antriebswelle (26) zusammenfallende Drehachse (72) verläuft.

4. Schmiervorrichtung nach wenigstens einem der vorangehenden Ansprüche, **dadurch gekennzeichnet, dass** entlang einer zylindrischen Wandung (80) des Verteilerstutzens (58) weitere Schmierstofföffnungen (82) ausgebildet sind, aus denen ebenfalls Schmierstoff (48) in Richtung des Befestigungsbereichs (70) austreten kann.

5. Schmiervorrichtung nach wenigstens einem der vorangehenden Ansprüche, **dadurch gekennzeichnet, dass** die Schmierstofföffnungen (68, 82) umfangsmäßig am Deckel (64) und/oder Verteilerstutzen (58) in Gestalt einer Düsenreihe (84, 86) nebeneinander angeordnet sind.

6. Schmiervorrichtung nach wenigstens einem der vorangehenden Ansprüche, **dadurch gekennzeichnet, dass** der Deckel (64) einen im Bereich eines Befestigungsflanschs (88) umlaufenden Vorsprung (90) aufweist, der in montiertem Zustand in eine am Verteilerstutzen (58) vorgesehene Ausnehmung (92) zur Herstellung einer flüssigkeitsdichten Rastverbindung eingreift.

7. Schmiervorrichtung nach wenigstens einem der vorangehenden Ansprüche, **dadurch gekennzeichnet, dass** der zur Montage der Bremsscheibe (18) vorgesehene Befestigungsbereich (70) am Verteilerstutzen (58) eine Anlagefläche (94) zur formschlüssigen Aufnahme einer von einer Bremsscheibe (18) umfassten Montageöffnung (96) aufweist, wobei der Deckel (64) in angebrachtem Zustand derart gegen die Bremsscheibe (18) gepresst wird, dass eine Klemmverbindung gegenüber der Anlagefläche (94) hergestellt ist.
